# EUROPÄISCHE PATENTSCHRIFT

(11) **EP 3 184 856 B1**
(45) Veröffentlichungstag und Bekanntmachung des Hinweises auf die Patenterteilung: **14.06.2023**
(21) Anmeldenummer: 16205759.0
(22) Anmeldetag: 21.12.2016
(51) Int. Cl.: F16H 1/28, F16H 55/08, F16H 57/08

(54) **PLANETENGETRIEBEVORRICHTUNG UND STRAHLTRIEBWERK MIT EINER PLANETENGETRIEBEVORRICHTUNG**
PLANETARY DRIVE DEVICE AND JET ENGINE HAVING A PLANETARY DRIVE DEVICE
DISPOSITIF D'ENGRENAGE PLANÉTAIRE ET MOTEUR À RÉACTION COMPRENANT UN DISPOSITIF D'ENGRENAGE PLANÉTAIRE

(30) Priorität: 23.12.2015 DE 102015122813
(43) Veröffentlichungstag der Anmeldung: 28.06.2017
(73) Patentinhaber: Rolls-Royce Deutschland Ltd & Co KG, 15827 Blankenfelde-Mahlow (DE)
(72) Erfinder: Venter, Gideon, 14165 Berlin (DE); Krüger, David, 14469 Potsdam (DE)
(74) Vertreter: Schmidt, Martin Michael

(56) Entgegenhaltungen:
- EP-A1- 2 402 631
- CN-U- 201 851 630

## Beschreibung

Die Erfindung betrifft eine Planetengetriebevorrichtung sowie ein Strahltriebwerk mit einer Planetengetriebevorrichtung gemäß der im Oberbegriff des Patentanspruches 1 bzw. 13 näher definierten Art.

Bei aus der Praxis bekannten Planetengetriebevorrichtungen mit wenigstens einem Sonnenrad, einem Hohlrad und mindestens einem sowohl mit dem Sonnenrad als auch mit dem Hohlrad in Eingriff stehendem Planetenrad, das auf einem Planetenträger drehbar gelagert ist, greift am Planetenrad bei rotierendem Planetenträger jeweils eine Zentrifugalkraft an, die in Kombination mit in Umfangsrichtung der Zahnräder wirkenden Verzahnungskräften gegebenenfalls unerwünscht hohe Belastungen im Bereich eines Lagers zwischen dem Planetenrad und dem Planetenträger verursachen. Grundsätzlich bedingen hohe Lagerbelastungen eine entsprechende Auslegung des Lagers, um eine Planetengetriebevorrichtung mit einer gewünscht hohen Lebensdauer betreiben zu können.

Aus einer solchen Auslegung einer Planetengetriebevorrichtung insbesondere im Bereich des Lagers des Planetenrades resultieren jedoch nachteilhafterweise hohe Herstellkosten und ein hohes Gesamtgewicht einer Planetengetriebevorrichtung, was insbesondere bei einem Einsatz im Bereich eines Strahltriebwerkes bzw. eines Flugtriebwerkes unerwünscht ist.

Eine Planetengetriebevorrichtung mit asymmetrischen Zahnprofilen ausgebildeten Zahnrädern ist aus der CN 201 851 630 U bekannt. Die asymmetrischen Zahnprofile sind dabei so gewählt, dass eine Tragfähigkeit der Zahnräder in Hauptbetriebsdrehrichtung der Planetengetriebevorrichtung wesentlich höher ist als in die dazu entgegengesetzte Drehrichtung. Hierfür ist ein Eingriffswinkel zwischen während der Hauptbetriebsdrehrichtung miteinander in Eingriff stehenden Zahnflanken von Zähnen eines als Sonnenrad ausgeführten Zahnrades und eines als Planetenrad ausgebildeten Zahnrades größer als ein Eingriffswinkel zwischen während der Hauptbetriebsdrehrichtung miteinander in Eingriff stehenden Zahnflanken von Zähnen eines als Hohlrad ausgeführten Zahnrades und des Planetenrades.

Bei dieser bekannten Lösung treten während eines Betriebes der Planetengetriebevorrichtung in die Hauptbetriebsdrehrichtung aufgrund von im Bereich der Planetenräder angreifenden Fliehkräften ebenfalls hohe Belastungen im Bereich eines Lagers zwischen dem Planetenrad und dem Planetenträger auf.

Aus der EP 2 402 631 A1 ist ein Planetengetriebe für eine Windkraftanlage bekannt, das mit einem Getriebegehäuse, einem Sonnenrad, einem Hohlrad und mehreren in einem Planetenträger gelagerten Planetenrädern ausgeführt ist. Das Hohlrad ist beispielsweise mit einer Antriebswelle verbunden, wohingegen das Sonnenrad mit einer Abtriebswelle verbunden ist. Verzahnungen des Hohlrads, des Sonnenrads und der Planetenräder sind dabei asymmetrisch ausgebildet.

Der vorliegenden Erfindung liegt die Aufgabe zugrunde, eine kostengünstige und durch ein geringes Bauteilgewicht gekennzeichnete Planetengetriebevorrichtung zur Verfügung zu stellen, die selbst bei hohen im Bereich eines Planetenrades angreifenden Zentrifugalkräften eine ausreichende Lebensdauer aufweist, und zusätzlich ein mit einer Planetengetriebevorrichtung ausgeführtes kostengünstiges und ein geringes Eigengewicht aufweisendes Strahltriebwerk zu schaffen, das mit geringem Wartungsaufwand betreibbar ist.

Erfindungsgemäß wird diese Aufgabe mit einer Planetengetriebevorrichtung sowie mit einem Strahltriebwerk gemäß den Merkmalen des Patentanspruches 1 bzw. 13 gelöst.

Bei der erfindungsgemäßen Planetengetriebevorrichtung für ein Flugtriebwerk mit wenigstens einem Sonnenrad, einem Hohlrad und mindestens einem sowohl mit dem Sonnenrad als auch mit dem Hohlrad in Eingriff stehendem Planetenrad, das auf einem Planetenträger drehbar gelagert ist, wobei Verzahnungen im Bereich des Sonnenrades, des Hohlrades und des Planetenrades asymmetrisch ausgeführt sind, ist ein Eingriffswinkel zwischen während einer Hauptdrehrichtung des Planetenträgers miteinander in Eingriff stehenden Zahnflanken von Zähnen des Hohlrades und des Planetenrades größer ist als ein Eingriffswinkel zwischen dabei miteinander in Eingriff stehenden Zahnflanken von Zähnen des Planetenrades und des Sonnenrades.

Durch die erfindungsgemäß asymmetrische Ausführung der Verzahnungen im Bereich des Sonnenrades, des Hohlrades und des Planetenrades wird im Betrieb der Planetengetriebevorrichtung während der Hauptdrehrichtung des Planetenträgers jeweils im Zahneingriff zwischen dem Hohlrad und dem Planetenrad eine resultierende Verzahnungsradialkraftkomponente erzeugt, die der am Planetenrad angreifenden Zentrifugalkraft entgegengerichtet ist und mittels der eine Lagerbelastung des Lagers zwischen dem Planetenrad und dem rotierenden Planetenträger auf konstruktiv einfache und kostengünstige Weise verringert wird.

Das Lager zwischen dem Planetenrad und dem Planetenträger ist durch die Reduzierung der Lagerbelastung mit geringerer Leistungsfähigkeit auslegbar und die Planetengetriebevorrichtung insgesamt kostengünstiger und mit niedrigerem Bauteilgewicht ausführbar. Zusätzlich wird durch die geringere Lagerbelastung auch eine Lebensdauer des Lagers erhöht, wodurch zusätzlich ein Wartungsaufwand gering ist.

Ist der Eingriffswinkel zwischen den während der Hauptdrehrichtung des Planetenträgers miteinander in Eingriff stehenden Zahnflanken der Zähne des Hohlrades und des Planetenrades größer gleich 25°, wird die im Betrieb auftretende Lagerbelastung des Lagers zwischen dem Planetenrad und dem Planetenträger reduziert, die sich unter anderem durch die aus der Masse des Planetenrades, einer Drehzahl des Planetenträgers sowie einem Abstand zwischen der Drehachse des Planetenrades und einer Drehhachse des Planetenträgers resultierenden Fliehkraft ergibt, da eine im Betrieb im Verzahnungsbereich wirkende und der am Planetenrad angreifenden Fliehkraft entgegen gerichtete Radialkraftkomponente mit steigender Differenz zwischen den Eingriffswinkeln zunimmt.

Bei einer vorteilhaften Variante der erfindungsgemäßen Planetengetriebevorrichtung, bei der die Belastungen des Lagers zwischen dem Planetenrad und dem Planetenträger im Vergleich zu der letztbeschriebenen Ausführungsform weiter reduziert ist, ist der Eingriffswinkel zwischen den während der Hauptdrehrichtung des Planetenträgers miteinander in Eingriff stehenden Zahnflanken der Zähne des Hohlrades und des Planetenrades größer 30°.

Um die im Bereich des Lagers zwischen dem Planetenrad und dem Planetenträger angreifenden und aus den Zentrifugalkräften resultierenden Lagerbelastungen in möglichst hohem Umfang reduzieren zu können, werden zwischen den während der Hauptdrehrichtung des Planetenträgers miteinander in Eingriff stehenden Zahnflanken der Zähne des Hohlrades und des Planetenrades Eingriffswinkel bis zu 60° vorgesehen.

Die Belastungen des Lagers zwischen dem Planetenrad und dem Planetenträger werden bei einer weiteren vorteilhaften Ausführungsform der erfindungsgemäßen Planetengetriebevorrichtung dadurch reduziert, dass der Eingriffswinkel zwischen den während der Hauptdrehrichtung des Planetenträgers miteinander in Eingriff stehenden Zahnflanken der Zähne des Planetenrades und des Sonnenrades größer gleich 10° ist.

Um die Zähne des Planetenrades mit einer ausreichenden Zahndicke darstellen zu können, ist der Eingriffswinkel zwischen den während der Hauptdrehrichtung des Planetenträgers miteinander in Eingriff stehenden Zahnflanken der Zähne des Planetenrades und des Sonnenrades bei einer weiteren vorteilhaften Ausführungsform der erfindungsgemäßen Planetengetriebevorrichtung kleiner gleich 25°.

Eine Belastung der Zähne des Planetenrades und des Sonnenrades ist bei entsprechend hohem zu übertragendem Drehmoment auf zulässige Werte begrenzbar, wenn eine Profilüberdeckung während der Hauptdrehrichtung des Planetenträgers im Eingriffsbereich zwischen der Verzahnung des Planetenrades und der Verzahnung des Sonnenrades größer gleich 2 ist, wobei vorliegend dann definitionsgemäß eine sogenannte Hochverzahnung im Kontaktbereich zwischen dem Planetenrad und dem Sonnenrad vorliegt.

Bei einer weiteren vorteilhaften Ausführungsform der erfindungsgemäßen Planetengetriebevorrichtung ist während der Hauptdrehrichtung des Planetenträgers eine Profilüberdeckung im Eingriffsbereich zwischen der Verzahnung des Planetenrades und der Verzahnung des Hohlrades kleiner 2, womit eine Zahnkopfdicke der Zähne des Planetenrades und des Sonnenrades jeweils in einem Schadensfälle vermeidendem Umfang dimensionierbar ist und die erfindungsgemäße Planetengetriebevorrichtung mit hoher Lebensdauer betreibbar ist.

Ist das Planetenrad als Doppelplanetenrad ausgeführt, ist eine Abstimmung der Zahnprofile der miteinander in Eingriff stehenden Zähne des Planetenrades und des Hohlrades in geringerem Umfang abhängig von den Zahnprofilen der miteinander in Eingriff stehenden Zähne des Planetenrades und des Sonnenrades.

Bei einer einfach und kostengünstig herstellbaren Ausführungsform der erfindungsgemäßen Planetengetriebevorrichtung sind das Hohlrad, das Sonnenrad und das Planetenrad gradverzahnt ausgebildet.

Sind das Hohlrad, das Sonnenrad und das Planetenrad schräg verzahnt ausgeführt, ist die erfindungsgemäße Planetengetriebevorrichtung mit höherer Leistungsdichte ausführbar.

Dabei besteht die Möglichkeit, dass das Hohlrad, das Sonnenrad und das Planetenrad jeweils mit einer Doppelschrägverzahnung ausgebildet sind, bei welcher im Bereich der Zahneingriffe wirkende Axialkraftkomponenten sich ausgleichen und eine gesamte Axialverzahnungskraft bestenfalls gleich Null ist.

Das erfindungsgemäße Strahltriebwerk mit einem Bläser und einer damit wirkverbundenen Niederdruckwelle umfasst im Bereich der Wirkverbindung zwischen dem Bläser und der Niederdruckwelle eine im vorbeschriebenen Umfang ausgeführte Planetengetriebevorrichtung und ist daher im Vergleich zu aus dem Stand der Technik bekannten Strahltriebwerken mit geringerem Bauteilgewicht sowie kostengünstiger herstellbar und mit geringerem Wartungsaufwand betreibbar.

Bei vorteilhaften Weiterbildungen des erfindungsgemäßen Strahltriebwerkes steht der Bläser mit dem Hohlrad, dem Planetenträger oder mit dem Sonnenrad in Verbindung, während die Niederdruckwelle mit dem Sonnenrad, dem Planetenträger oder mit dem Hohlrad wirkverbunden ist.

Sowohl die in den Patentansprüchen angegebenen Merkmale als auch die in den nachfolgenden Ausführungsbeispielen der erfindungsgemäßen Planetengetriebevorrichtung bzw. des erfindungsgemäßen Strahltriebwerkes angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen der erfindungsgemäßen Planetengetriebevorrichtung bzw. des erfindungsgemäßen Strahltriebwerkes ergeben sich aus den Patentansprüchen und den nachfolgend unter Bezugnahme auf die Zeichnung prinzipmäßig beschriebenen Ausführungsbeispiele, wobei zugunsten der Übersichtlichkeit für bau- und funktionsgleiche Bauteile dieselben Bezugszeichen verwendet werden.

Es zeigt:
- Fig. 1: eine stark schematisierte Darstellung eines Teilbereichs eines Strahltriebwerkes mit einem Bläser und mit einer Turbineneinrichtung, wobei der Bläser im Bereich einer Bläserwelle mit einer Welle einer Planetengetriebevorrichtung in Verbindung steht, die über eine weitere Welle mit einer Welle der Turbineneinrichtung gekoppelt ist;
- Fig. 2: eine vereinfachte Alleindarstellung einer ersten Ausführungsform der Planetengetriebevorrichtung des Strahltriebwerkes gemäß Fig. 1 in einer Seitenansicht;
- Fig. 3: eine vergrößerte Darstellung eines in Fig. 2 näher gekennzeichneten Bereiches III, der einen Eingriffsbereich eines Planetenrades mit einem Hohlrad der Planetengetriebevorrichtung umfasst;
- Fig. 4: eine Fig. 3 entsprechende Darstellung eines in Fig. 2 näher gekennzeichneten Bereiches IV, der einen Eingriffsbereich des Planetenrades der Planetengetriebevorrichtung mit einem Sonnenrad umfasst;
- Fig. 5: eine Schnittansicht einer ersten Ausführungsform der Planetengetriebevorrichtung entlang einer in Fig. 2 näher gezeigten Schnittlinie V-V;
- Fig. 6: eine Fig. 5 entsprechende Darstellung einer zweiten Ausführungsform der Planetengetriebevorrichtung, bei der die Planetenräder als Doppelplanetenräder ausgeführt sind.

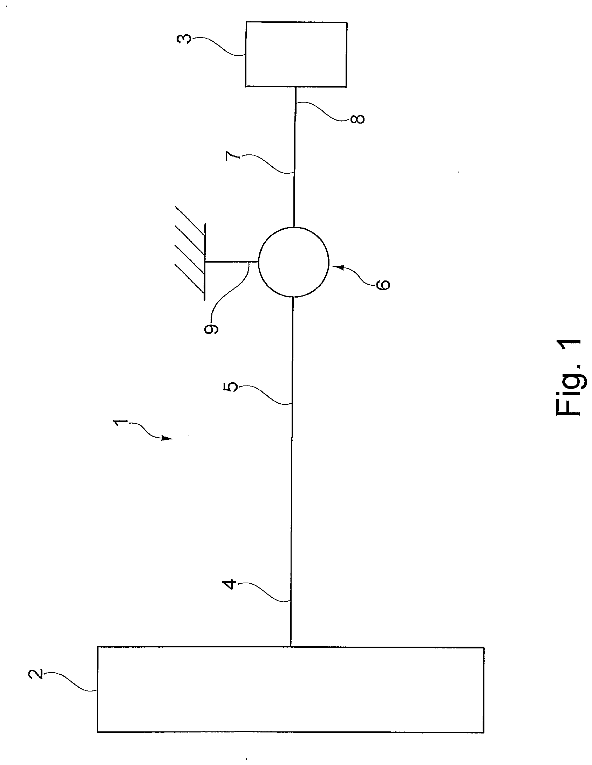

Fig. 1 zeigt einen Teil eines Strahltriebwerkes 1 mit einem Bläser 2 und mit einer Turbineneinrichtung 3 in stark schematisierter Darstellung. Der Bläser 2 steht im Bereich einer Bläserwelle 4 mit einer Welle 5 einer Planetengetriebevorrichtung 6 in Wirkverbindung, die über eine weitere Welle 7 mit einer Welle 8 bzw. einer Niederdruckwelle der Turbineneinrichtung 3 gekoppelt ist. Eine zusätzliche Welle 9 der Planetengetriebevorrichtung 6 ist drehfest ausgebildet.

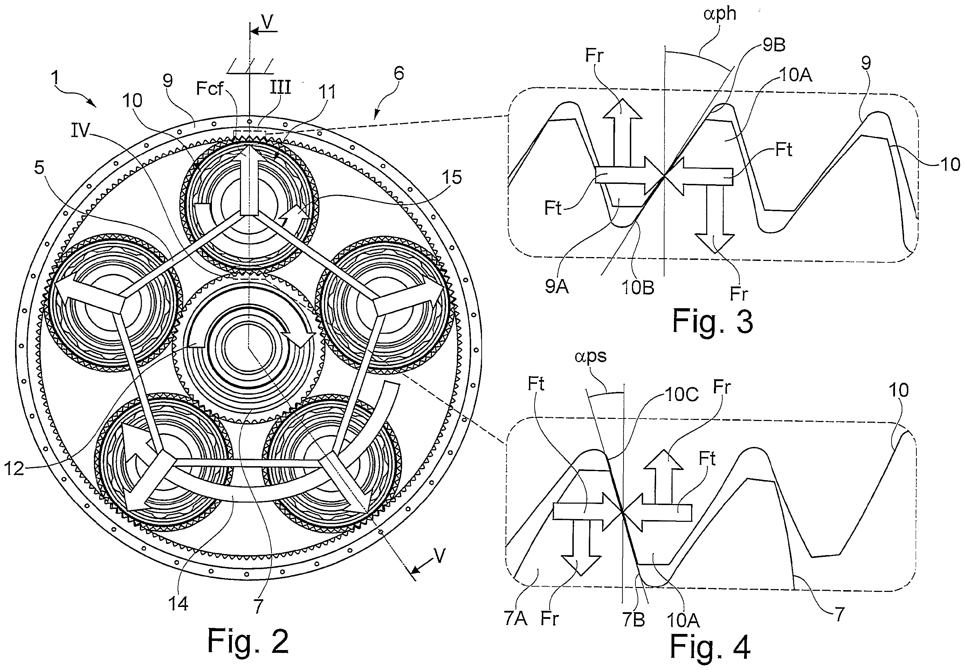

Fig. 2 zeigt eine schematisierte Seitenansicht der Planetengetriebevorrichtung 6 des Strahltriebwerkes 1 gemäß Fig. 1. Dabei sind die Welle 5 als Planetenträger, die Welle 7 als Sonnenrad und die Welle 9 als Hohlrad der Planetengetriebevorrichtung 6 ausgeführt. Grundsätzlich sind der Bläser 2 und die Turbineneinrichtung 3 über die Planetengetriebevorrichtung 6 so miteinander verbunden, dass die Drehzahl der Welle 8 der Turbineneinrichtung 3 um einen der Getriebeübersetzung der Planetengetriebevorrichtung 6 entsprechenden Faktor größer ist als die Drehzahl der Bläserwelle 4 des Bläsers 2, während das im Bereich der Bläserwelle 4 anliegende Drehmoment um den der Getriebeübersetzung der Planetengetriebevorrichtung 6 entsprechenden Faktor größer ist als das im Bereich der Welle 8 der Turbineneinrichtung 3 anliegende Drehmoment.

Während eines turbineneinrichtungsseitigen Antriebes des Bläsers 2 weist der Planetenträger 5 seine Hauptdrehrichtung 14 auf und es wird ein über die Welle 8 der Turbineneinrichtung 3 in die Planetengetriebevorrichtung 6 eingeleitetes Drehmoment vom Sonnenrad 7 in Richtung des Planetenträgers 5 weitergeleitet.

Hierfür sind bei den in der Zeichnung dargestellten Ausführungsbeispielen auf dem Planetenträger vorliegend fünf Planetenräder 10 über Lagereinrichtungen 11 drehbar angeordnet. Dabei besteht die Möglichkeit, die Planetengetriebevorrichtung in Abhängigkeit des jeweils vorliegenden Anwendungsfalles auch mit einer hiervon abweichenden Anzahl von Planetenrädern auszuführen.

Im Betrieb des Flugtriebwerkes 1 rotieren sowohl der mit der Bläserwelle 4 drehfest verbundene Planetenträger 5 als auch das Sonnenrad 7 sowie die Planetenräder 10. Aufgrund der Rotation des Planetenträgers 5 in seine Hauptdrehrichtung 14 greifen mit zunehmender Drehzahl des Planetenträgers 5 im Bereich der in Drehrichtung 15 ebenfalls rotierenden Planetenräder 10 ansteigende Fliehkräfte Fcf an, aus welchen zusätzlich zu den aus im Bereich der Zahneingriffe zwischen den Planetenrädern 10 und dem Hohlrad 9 sowie im Bereich der Zahneingriffe zwischen den Planetenrädern 10 und dem dann in Drehrichtung 12 rotierenden Sonnenrad 7 jeweils in Umfangsrichtung des Sonnenrades 7, der Planetenräder 10 und des Hohlrades 9 wirkenden Verzahnungskräften bzw. Tangentialkräften Ft Lagerkräfte im Bereich der Lagereinrichtungen 11 resultieren.

Um zumindest die aus den betriebsbedingt im Bereich der Planetenräder 10 angreifenden Fliehkräften resultierenden Lagerbelastungen zu reduzieren, ist ein Eingriffswinkel aph zwischen während der Hauptdrehrichtung 14 des Planetenträgers 5 miteinander in Eingriff stehenden Zahnflanken 9B, 10B von Zähnen 9A, 10A des Hohlrades 9 und der Planetenräder 10 größer als ein Eingriffswinkel αps zwischen den dabei miteinander in Eingriff stehenden Zahnflanken 10C, 7B von Zähnen 10A, 7A der Planetenräder 10 und des Sonnenrades 7. Die hierfür vorgesehenen asymmetrischen Zahnprofile der Zähne 9A, 10A und 7A, 10A des Hohlrades 9 und der Planetenräder 10 sowie des Sonnenrades 7 und der Planetenräder 10 sind jeweils in Fig. 3 und Fig. 4 in vergrößerter sowie schematisierter Ansicht bereichsweise gezeigt.

Treibt die Turbineneinrichtung 3 das Sonnenrad 7 in die in Fig. 2 näher dargestellte Drehrichtung 12 an, wird das am Sonnenrad 7 anliegende Drehmoment im Bereich der Zahneingriffe zwischen den Planetenrädern 10 und dem Sonnenrad 7 auf die Planetenräder 10 und von dort auf den Planetenträger 5 weitergeleitet, der im vorbeschriebenen Umfang mit dem Bläser 2 über die die Bläserwelle 4 drehfest in Wirkverbindung steht. Gleichzeitig werden die dabei auftretenden Tangentialkräfte Ft und die Fliehkräfte Fcf im Bereich des drehfesten Hohlrades 9 abgestützt.

Die im Bereich der Zahneingriffe zwischen den Planetenrädern 10 und dem Hohlrad 9 aus den asymmetrischen Zahnprofilen während der Hauptdrehrichtung des Planetenträgers 5 resultierenden und in Richtung des Sonnenrades 7 gerichteten Radialkraftkomponenten Fr wirken den jeweils im Bereich der Lagereinrichtungen 11 abzustützenden Fliehkräften Fcf entgegen. Dadurch wird eine in Radialrichtung an den Lagern 11 jeweils angreifende Lagerbelastung in gewünschtem Umfang reduziert.

In Abhängigkeit des jeweils vorliegenden Lastfalles wird der Eingriffswinkel aph in einem Winkelbereich zwischen 25° und 60° vorgesehen, während für den Eingriffswinkel αps bevorzugt Winkelwerte zwischen 10° und 25° ausgewählt werden.

Die konstruktive Vorgabe, den Eingriffswinkel αps immer kleiner als den Eingriffswinkel αph vorzusehen, bewirkt, dass eine im Eingriffsbereich zwischen den Zähnen 7A des Sonnenrades 7 und den Zähnen 10A der Planetenräder 10 im Betrieb der Planetengetriebevorrichtung 6 wirkende Radialkraftkomponenten Fr kleiner sind als die im Eingriffsbereich zwischen den Zähnen 10A der Planetenräder 10 und den Zähnen 9A des Hohlrades 9 wirkenden Radialkraftkomponenten Fr, womit die insgesamt angestrebte Entlastung im Bereich der Lagereinrichtungen 11 durch die asymmetrische Ausführung der Verzahnungen des Hohlrades 9, der Planetenräder 10 und des Sonnenrades 7 gewährleistet ist.

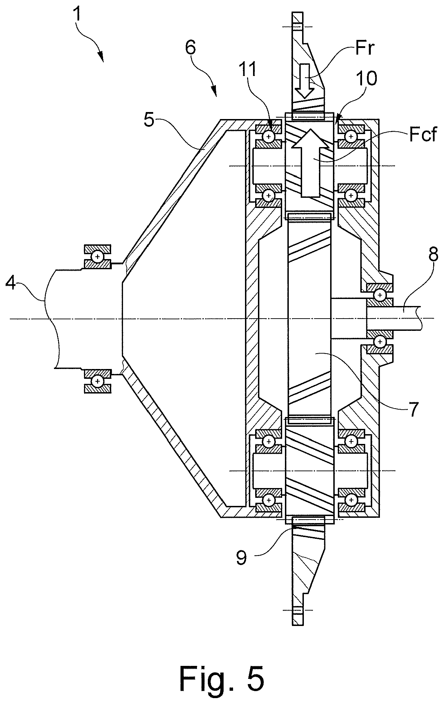

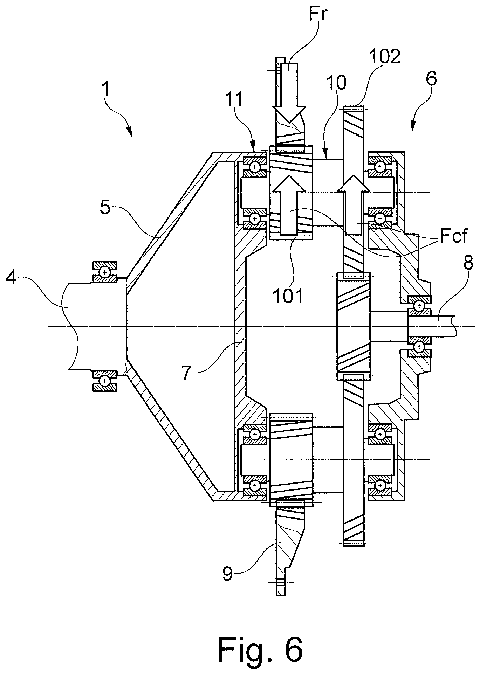

Fig. 5 zeigt eine Schnittansicht einer ersten Ausführungsform der Planetengetriebevorrichtung 6 gemäß Fig. 2 entlang der Schnittlinie V-V, bei der die Planetenräder 10 als Einfachplaneten ausgebildet sind und das Hohlrad 9, die Planetenräder 10 und das Sonnenrad 7 jeweils mit einer Schrägverzahnung ausgeführt sind. Im Unterschied hierzu zeigt Fig. 6 eine Fig. 5 entsprechende Darstellung eines zweiten Ausführungsbeispiels der Planetengetriebevorrichtung 6 gemäß Fig. 2, die als Doppelplaneten ausgebildete Planetenräder 10 umfasst. Dabei kämmt ein erster Planetenradbereich 101 der Planetenräder 10 jeweils mit dem Hohlrad 9, während ein zweiter Planetenradbereich 102 der Planetenräder 10 jeweils mit dem Sonnenrad 7 in Eingriff steht.

Unabhängig von der Ausführung der Planetenräder 10 als Einfach- oder als Doppelplanetenräder ist eine Profilüberdeckung im Bereich der Zahneingriffe zwischen den Planetenrädern 10 und dem Hohlrad 9 kleiner 2, während die Profilüberdeckung im Bereich der Zahneingriffe zwischen den Planetenrädern 10 und dem Sonnenrad 7 größer gleich 2 ist.

### Bezugszeichenliste

- 1: Strahltriebwerk
- 2: Bläser
- 3: Turbineneinrichtung
- 4: Bläserwelle
- 5: Welle der Planetengetriebevorrichtung, Planetenträger
- 6: Planetengetriebevorrichtung
- 7: Welle der Planetengetriebevorrichtung, Sonnenrad
- 7A: Zahn
- 7B: Zahnflanke
- 8: Welle der Turbineneinrichtung
- 9: Welle der Planetengetriebevorrichtung, Hohlrad
- 9A: Zahn
- 9B: Zahnflanke
- 10: Planetenrad
- 10A: Zahn
- 10B, 10C: Zahnflanke
- 101, 102: Planetenradbereich
- 11: Lagereinrichtung
- 12: Drehrichtung des Sonnenrades
- 14: Hauptdrehrichtung des Planetenträgers
- 15: Drehrichtung des Planetenrades
- Fcf: Fliehkraft
- Fr: Radialkraftkomponente
- Ft: Verzahnungskräfte
- αph: Eingriffswinkel
- αps: Eingriffswinkel

## Patentansprüche

1. Planetengetriebevorrichtung (6) für ein Flugtriebwerk (1) mit wenigstens einem Sonnenrad (7), einem Hohlrad (9) und mindestens einem sowohl mit dem Sonnenrad (7) als auch mit dem Hohlrad (9) in Eingriff stehendem Planetenrad (10), das auf einem Planetenträger (5) drehbar gelagert ist, wobei Verzahnungen (7A, 9A, 10A) im Bereich des Sonnenrades (7), des Hohlrades (9) und des Planetenrades (10) asymmetrisch ausgeführt sind, **dadurch gekennzeichnet, dass** ein Eingriffswinkel (αph) zwischen während einer Hauptdrehrichtung (14) des Planetenträgers (5) miteinander in Eingriff stehenden Zahnflanken (9B, 10B) von Zähnen (9A, 10A) des Hohlrades (9) und des Planetenrades (10) größer ist als ein Eingriffswinkel (αps) zwischen dabei miteinander in Eingriff stehenden Zahnflanken (10C, 7B) von Zähnen (10A, 7A) des Planetenrades (10) und des Sonnenrades (7).

2. Planetengetriebevorrichtung nach Anspruch 1, **dadurch gekennzeichnet, dass** der Eingriffswinkel (αph) zwischen den während der Hauptdrehrichtung (14) des Planetenträgers (5) miteinander in Eingriff stehenden Zahnflanken (9A, 10A) der Zähne (9A, 10A) des Hohlrades (9) und des Planetenrades (10) größer gleich 25° ist.

3. Planetengetriebevorrichtung nach Anspruch 2, **dadurch gekennzeichnet, dass** der Eingriffswinkel (αph) zwischen den während der Hauptdrehrichtung (14) des Planetenträgers (5) miteinander in Eingriff stehenden Zahnflanken (9A, 10A) der Zähne (9A, 10A) des Hohlrades (9) und des Planetenrades (10) größer gleich 30° ist.

4. Planetengetriebevorrichtung nach einem der Ansprüche 1 bis 3, **dadurch gekennzeichnet, dass** der Eingriffswinkel (αph) zwischen den während der Hauptdrehrichtung (14) des Planetenträgers (5) miteinander in Eingriff stehenden Zahnflanken (9A, 10A) der Zähne (9A, 10A) des Hohlrades (9) und des Planetenrades (10) kleiner gleich 60° ist.

5. Planetengetriebevorrichtung nach einem der Ansprüche 1 bis 4, **dadurch gekennzeichnet, dass** der Eingriffswinkel (αps) zwischen den während der Hauptdrehrichtung (14) des Planetenträgers (5) miteinander in Eingriff stehenden Zahnflanken (10C, 7B) der Zähne (10A, 7A) des Planetenrades (10) und des Sonnenrades (7) größer gleich 10° ist.

6. Planetengetriebevorrichtung nach einem der Ansprüche 1 bis 5, **dadurch gekennzeichnet, dass** der Eingriffswinkel (αps) zwischen den während der Hauptdrehrichtung (14) des Planetenträgers (5) miteinander in Eingriff stehenden Zahnflanken (10C, 7B) der Zähne (10A, 7A) des Planetenrades (10) und des Sonnenrades (7) kleiner gleich 25° ist.

7. Planetengetriebevorrichtung nach einem der Ansprüche 1 bis 6, **dadurch gekennzeichnet, dass** während der Hauptdrehrichtung (14) des Planetenträgers (5) im Eingriffsbereich zwischen der Verzahnung des Planetenrades (10) und der Verzahnung des Hohlrades (9) eine Profilüberdeckung kleiner 2 ist.

8. Planetengetriebevorrichtung nach einem der Ansprüche 1 bis 7, **dadurch gekennzeichnet, dass** während der Hauptdrehrichtung (14) des Planetenträgers (5) im Eingriffsbereich zwischen der Verzahnung des Planetenrades (10) und der Verzahnung des Sonnenrades (7) eine Profilüberdeckung größer gleich 2 ist.

9. Planetengetriebevorrichtung nach einem der Ansprüche 1 bis 8, **dadurch gekennzeichnet, dass** das Planetenrad (10) als Doppelplanetenrad ausgeführt ist.

10. Planetengetriebevorrichtung nach einem der Ansprüche 1 bis 9, **dadurch gekennzeichnet, dass** das Hohlrad (9) oder das Sonnenrad (7) gehäusefest ausgebildet ist.

11. Planetengetriebevorrichtung nach einem der Ansprüche 1 bis 10, **dadurch gekennzeichnet, dass** das Hohlrad (9), das Sonnenrad (7) und das Planetenrad (10) geradverzahnt ausgebildet sind.

12. Planetengetriebevorrichtung nach einem der Ansprüche 1 bis 10, **dadurch gekennzeichnet, dass** das Hohlrad (9), das Sonnenrad (7) und das Planetenrad (10) schrägverzahnt, vorzugsweise doppelschrägverzahnt ausgebildet sind.

13. Strahltriebwerk (1) mit einem Bläser (2) und einer damit wirkverbundenen Niederdruckwelle (8), **dadurch gekennzeichnet, dass** die Wirkverbindung zwischen dem Bläser (2) und der Niederdruckwelle (8) eine Planetengetriebevorrichtung (6) gemäß einem der Patentansprüche 1 bis 12 umfasst.

14. Strahltriebwerk nach Anspruch 13, **dadurch gekennzeichnet, dass** der Bläser (2) mit dem Hohlrad (9), dem Planetenträger (5) oder dem Sonnenrad (7) in Verbindung steht, während die Niederdruckwelle (8) mit dem Sonnenrad (7), mit dem Planetenträger (5) oder mit dem Sonnenrad (9) wirkverbunden ist.

## Claims

1. Planetary gear device (6) for an aircraft engine (1), having at least one sun gear (7), having a ring gear (9), and having at least one planet gear (10) which is in engagement both with the sun gear (7) and with the ring gear (9) and which is rotatably mounted on a planet carrier (5), wherein toothings (7A, 9A, 10A) in the region of the sun gear (7), of the ring gear (9) and of the planet gear (10) are of asymmetrical design, **characterized in that** an engagement angle (αph) between tooth flanks (9B, 10B) of teeth (9A, 10A) of the ring gear (9) and of the planet gear (10) that are in engagement with one another during a main direction of rotation (14) of the planet carrier (5) is larger than an engagement angle (αps) between tooth flanks (10C, 7B) of teeth (10A, 7A) of the planet gear (10) and of the sun gear (7) that are in engagement with one another at the same time.

2. Planetary gear device according to Claim 1, **characterized in that** the engagement angle (αph) between the tooth flanks (9A, 10A) of the teeth (9A, 10A) of the ring gear (9) and of the planet gear (10) in engagement with one another during the main direction of rotation (14) of the planet carrier (5) is greater than or equal to 25°.

3. Planetary gear device according to Claim 2, **characterized in that** the engagement angle (αph) between the tooth flanks (9A, 10A) of the teeth (9A, 10A) of the ring gear (9) and of the planet gear (10) in engagement with one another during the main direction of rotation (14) of the planet carrier (5) is greater than or equal to 30°.

4. Planetary gear device according to one of Claims 1 to 3, **characterized in that** the engagement angle (αph) between the tooth flanks (9A, 10A) of the teeth (9A, 10A) of the ring gear (9) and of the planet gear (10) in engagement with one another during the main direction of rotation (14) of the planet carrier (5) is less than or equal to 60°.

5. Planetary gear device according to one of Claims 1 to 4, **characterized in that** the engagement angle (αps) between the tooth flanks (10C, 7B) of the teeth (10A, 7A) of the planet gear (10) and of the sun gear (7) in engagement with one another during the main direction of rotation (14) of the planet carrier (5) is greater than or equal to 10°.

6. Planetary gear device according to one of Claims 1 to 5, **characterized in that** the engagement angle (αps) between the tooth flanks (10C, 7B) of the teeth (10A, 7A) of the planet gear (10) and of the sun gear (7) in engagement with one another during the main direction of rotation (14) of the planet carrier (5) is less than or equal to 25°.

7. Planetary gear device according to one of Claims 1 to 6, **characterized in that**, during the main direction of rotation (14) of the planet carrier (5), a profile overlap is less than 2 in the engagement region between the toothing of the planet gear (10) and the toothing of the ring gear (9).

8. Planetary gear device according to one of Claims 1 to 7, **characterized in that**, during the main direction of rotation (14) of the planet carrier (5), a profile overlap is greater than or equal to 2 in the engagement region between the toothing of the planet gear (10) and the toothing of the sun gear (7).

9. Planetary gear device according to one of Claims 1 to 8, **characterized in that** the planet gear (10) is designed as a double planet gear.

10. Planetary gear device according to one of Claims 1 to 9, **characterized in that** the ring gear (9) or the sun gear (7) is configured to be fixed with respect to a housing.

11. Planetary gear device according to one of Claims 1 to 10, **characterized in that** the ring gear (9), the sun gear (7) and the planet gear (10) are configured to have a straight toothing.

12. Planetary gear device according to one of Claims 1 to 10, **characterized in that** the ring gear (9), the sun gear (7) and the planet gear (10) are configured to have a helical toothing, preferably a double helical toothing.

13. Jet engine (1) having a fan (2) and having a low-pressure shaft (8) operatively connected thereto, **characterized in that** the operative connection between the fan (2) and the low-pressure shaft (8) involves a Planetary gear device (6) according to one of Patent Claims 1 to 12.

14. Jet engine according to Claim 13, **characterized in that** the fan (2) is connected to the ring gear (9), to the planet carrier (5) or to the sun gear (7), while the low-pressure shaft (8) is operatively connected to the sun gear (7), to the planet carrier (5) or to the sun gear (9).

## Revendications

1. Dispositif d'engrenage planétaire (6) pour un moteur d'avion (1) avec au moins une roue solaire (7), une couronne (9) et au moins un satellite (10) en prise à la fois avec la roue solaire (7) et la couronne (9), qui est montée de manière rotative sur un porte-satellites (5), des dentures (7A, 9A, 10A) étant réalisées de manière asymétrique dans la zone de la roue solaire (7), de la couronne (9) et du satellite (10), **caractérisé en ce qu'**un angle d'engrènement (αph) entre des flancs de dents (9B, 10B) de dents (9A, 10A) de la couronne (9) et du satellite (10) en prise mutuelle pendant une direction de rotation principale (14) du porte-satellite (5) est plus grand qu'un angle d'engrènement (αps) entre des flancs de dents (10C, 7B) de dents (10A, 7A) du satellite (10) et de la roue solaire (7) en prise mutuelle.

2. Dispositif d'engrenage planétaire selon la revendication 1, **caractérisé en ce que** l'angle d'engrènement (αph) entre les flancs de dents (9A, 10A) des dents (9A, 10A) de la couronne (9) et du satellite (10) en prise mutuelle pendant la direction de rotation principale (14) du porte-satellites (5) est supérieur ou égal à 25°.

3. Dispositif d'engrenage planétaire selon la revendication 2, **caractérisé en ce que** l'angle d'engrènement (αph) entre les flancs de dents (9A, 10A) des dents (9A, 10A) de la couronne (9) et du satellite (10) en prise mutuelle pendant la direction de rotation principale (14) du porte-satellites (5) est supérieur ou égal à 30°.

4. Dispositif d'engrenage planétaire selon l'une quelconque des revendications 1 à 3, **caractérisé en ce que** l'angle d'engrènement (αph) entre les flancs de dents (9A, 10A) des dents (9A, 10A) de la couronne (9) et du satellite (10) en prise mutuelle pendant la direction de rotation principale (14) du porte-satellites (5) est inférieur ou égal à 60°.

5. Dispositif d'engrenage planétaire selon l'une quelconque des revendications 1 à 4, **caractérisé en ce que** l'angle d'engrènement (αps) entre les flancs de dents (10C, 7B) des dents (10A, 7A) du satellite (10) et de la roue solaire (7) en prise mutuelle pendant la direction de rotation principale (14) du porte-satellites (5) est supérieur ou égal à 10°.

6. Dispositif d'engrenage planétaire selon l'une quelconque des revendications 1 à 5, **caractérisé en ce que** l'angle d'engrènement (αps) entre les flancs de dents (10C, 7B) des dents (10A, 7A) du satellite (10) et de la roue solaire (7) en prise mutuelle pendant la direction de rotation principale (14) du porte-satellites (5) est inférieur ou égal à 25°.

7. Dispositif d'engrenage planétaire selon l'une quelconque des revendications 1 à 6, **caractérisé en ce que**, pendant la direction de rotation principale (14) du porte-satellites (5), un recouvrement du profil est inférieur à 2 dans la zone d'engrènement entre la denture du satellite (10) et la denture de la couronne (9),

8. Dispositif d'engrenage planétaire selon l'une quelconque des revendications 1 à 7, **caractérisé en ce que**, pendant la direction de rotation principale (14) du porte-satellites (5), un recouvrement du profil est supérieur ou égal à 2 dans la zone d'engrènement entre la denture du satellite (10) et la denture de la roue solaire (7) .

9. Dispositif d'engrenage planétaire selon l'une quelconque des revendications 1 à 8, **caractérisé en ce que** le satellite (10) est réalisé sous forme de satellite double.

10. Dispositif d'engrenage planétaire selon l'une quelconque des revendications 1 à 9, **caractérisé en ce que** la couronne (9) ou la roue solaire (7) est configurée sous forme solidaire du boîtier.

11. Dispositif d'engrenage planétaire selon l'une quelconque des revendications 1 à 10, **caractérisé en ce que** la couronne (9), la roue solaire (7) et le satellite (10) sont configurés à denture droite.

12. Dispositif d'engrenage planétaire selon l'une quelconque des revendications 1 à 10, **caractérisé en ce que** la couronne (9), la roue solaire (7) et le satellite (10) sont configurés à denture hélicoïdale, de préférence à double denture hélicoïdale.

13. Turboréacteur (1) avec une soufflante (2) et un arbre basse pression (8) relié fonctionnellement à celle-ci, **caractérisé en ce que** la liaison fonctionnelle entre la soufflante (2) et l'arbre basse pression (8) comprend un dispositif d'engrenage planétaire (6) selon l'une quelconque des revendications 1 à 12.

14. Turboréacteur selon la revendication 13, **caractérisé en ce que** la soufflante (2) est en liaison avec la couronne (9), le porte-satellites (5) ou la roue solaire (7), pendant que l'arbre basse pression (8) est en liaison fonctionnelle avec la roue solaire (7), avec le porte-satellites (5) ou avec la roue solaire (9).
